# EUROPEAN PATENT SPECIFICATION

(11) **EP 1 018 037 B1**
(45) Date of publication and mention of the grant of the patent: **23.04.2003**
(21) Application number: 98951335.3
(22) Date of filing: 31.08.1998
(51) Int. Cl.: G02B 1/04, B29D 11/00

(54) **PROCESS FOR THE MANUFACTURE OF A MOLDING**
VERFAHREN ZUR HERSTELLUNG EINES FORMKÖRPERS
PROCEDE DE FABRICATION DE MATIERE MOULEE

(30) Priority: 02.09.1997 US 57865 P
(43) Date of publication of application: 12.07.2000
(73) Proprietor: Novartis AG, 4056 Basel (CH); Novartis Pharma GmbH, 1230 Wien (AT)
(72) Inventor: HIRT, Thomas, CH-9445 Rebstein (CH); BARON, Richard, Carlton, Alpharetta, GA 30201 (US); LOHMANN, Dieter, CH-4142 Münchenstein (CH); MEIER, Wolfgang, Peter, CH-4053 Basel (CH)
(74) Representative: Becker, Konrad
(86) International application number: EP9805520
(87) International publication number: WO99012059

(56) References cited:
- WO-A-96/31792
- WO-A-97/49740

## Description

This invention relates broadly to a novel process for the manufacture of moldings such as biomedical devices, membranes and particularly moldings useful in optic and ophthalmic arts. More specifically, the invention relates to a novel process for the manufacture of contact lenses in which an amphiphilic crosslinkable prepolymer is first converted into a bicontinuous mesophase which is then crosslinked.

PCT publication WO 96/31792 discloses ophthalmic moldings such as contact lenses for extended wear use comprising bicontinuous phases, for example one oxygen-permeable phase allowing for permeation of oxygen and one ion-permeable phase allowing for permeation of water or ions. The ophthalmic moldings are prepared for example by crosslinking a crosslinkable prepolymer which is an amphiphilic block copolymer having hydrophobic oxygen-permeable segments and hydrophilic ion-permeable segments. Since the known prepolymers are water insoluble for the most part, crosslinking usually is carried out in an organic solvent such as chloroform or the like. Accordingly, the resulting molding has to be extracted afterwards in order to remove the solvent and furthermore has to be hydrated in order to obtain for example a contact lens which is ready for use.

The known process for the crosslinking of water-insoluble amphiphilic segmented copolymers which includes an extraction and hydration step is thus very time consuming and is therefore not suited to the economical manufacture of a large amount of moldings, such as contact lenses, in a short time. Accordingly, there is a demand for a more simplified process for the manufacture of those ophthalmic moldings which particularly omits an extraction and/or hydration step.

It now has surprisingly been found that a molding having an at least partly bicontinuous microstructure may be obtained conveniently by first converting a suitable amphiphilic segmented copolymer having crosslinkable groups into an at least partly bicontinuous mesophase and then crosslinking the mesophase obtained.

The present invention therefore relates to a process for the manufacture of a molding, which is an ophthalmic molding, a membrane, a catalyst or a molding useful in surgery, which comprises the following steps:
a) providing at least one prepolymer comprising one or more crosslinkable groups, wherein the prepolymer is an amphiphilic segmented copolymer comprising at least one hydrophobic segment A and one hydrophilic segment B;
b) preparing an at least partly bicontinuous mesophase of the prepolymer;
c) introducing the mesophase obtained into a mold;
d) triggering of the crosslinking; and
e) opening the mold such that the molding can be removed.

It has been ascertained in accordance with the invention that the process can be applied generally to amphiphilic segmented copolymers having the above properties.

The decisive criteria determining the suitability of a prepolymer for use in the process according to the invention are (i) that the prepolymer forms an optically clear bicontinuous mesophase in the melt or in the presence of an aqueous solution and (ii) that it comprises crosslinkable groups.

The term mesophase in this context is to be understood as meaning a thermodynamically stable mixture of an amphiphilic substance such as an above-mentioned crosslinkable amphiphilic substance and an aqueous solution or a melt of an above-mentioned crosslinkable amphiphilic block copolymer which shows in each case a self-assembled microstructure. Mesophases are typically homogeneous and optical transparent mixtures which lie in single phase regions of the phase diagram of the components the system is based on. These single phases may be of a liquid crystalline nature (such as lamellar, hexagonal or cubic) which indicates an ordered compartmentisation of components in the mixture with a geometrically regular and repeated structure, or may be of a non-crystalline nature in which compartmentisation is random and isotropic. An example for this latter type of mesophases is represented by microemulsions. Accordingly, many microstructures can occur within the general class of mesophases. Within the present invention, mesophases having a liquid crystalline microstructure are preferred. The mesophases of the claimed process thus preferably lie in single phase regions of the phase diagram that exhibit a crystalline structure and most preferably a cubic structure.

In addition, the mesophases of the present invention are at least partly bicontinuous, that is to say the mixture has at least two partly bicontinuous phases, for example an oxygen-permeable and an ion-permeable phase, which are intermingled.

A "phase", as used herein, refers to a region of substantially uniform composition which is a distinct and physically separate portion of a heterogeneous polymeric material. However, the term "phase" does not imply that the material described is a chemically pure substance, but merely that certain bulk properties differ significantly from the properties of another phase within the material. Thus, with respect to the polymeric components of an ophthalmic molding such as a lens, an ion-permeable phase refers to a region composed of essentially only ion-permeable polymer (and water, when hydrated), while an oxygen-permeable phase refers to a region composed of essentially only oxygen-permeable polymer (and perhaps a small amount of water, when hydrated).

"Bicontinuous phases" , as used herein, refers to at least two regions, each of substantially uniform composition which differs from the other, and each of which exhibiting its individual properties. With respect to ophthalmic moldings such as contact lenses it has been found that it is highly desirable to have bicontinuous phases of an oxygen-permeable polymer and an ion-permeable polymer which provide the lens with two continuous pathways or sets of continuous pathways extending from the inner surface of the lens to the outer surface of the lens. Said at least two continuous pathways ensure that the lens material has both a high oxygen transmissibility and ion or water permeability.

"Crosslinkable groups" denotes customary crosslinkable groups well-known to the person skilled in the art, such as, for example, photocrosslinkable or thermally crosslinkable groups. Crosslinkable groups such as those already proposed for the preparation of contact lens materials are especially suitable. Those include especially, but not exclusively, groups comprising carbon-carbon double bonds. To demonstrate the large variety of suitable crosslinkable groups, there are mentioned here, merely by way of example, the following crosslinking mechanisms: radical polymerisation, 2+2 cycloaddition, Diels-Alder reaction, ROMP (Ring Opening Metathesis Polymerisation), vulcanisation, cationic crosslinking, epoxy hardening and redox reaction.

The amphiphilic segmented copolymers of the invention comprise at least one hydrophobic segment A which comprises preferably an oxygen-permeable polymer as exemplified below, i.e. a polymer displaying a relatively high oxygen diffusion rate therethrough. In addition, the materials of this embodiment of the invention must be ophthalmically compatible.

Suitable hydrophobic segments A that the prepolymers may comprise are for example polysiloxanes; perfluoropolyalkyl ethers; specific unsaturated polymers, for example a polymer of a conjugated aliphatic or alicyclic diene, a polymer of an alkyne or dialkyne, a copolymer of a conjugated diene and a hydrophilic or hydrophobic vinylic monomer, and also partially hydrated derivatives thereof; or polysulfones. Preferred hydrophobic segments A comprise perfluoropolyalkyl ethers or particularly polysiloxanes.

According to one embodiment of the invention, the oxygen-permeable polymer in segment A comprises a polysiloxane block having terminal alkylene groups of Formula (I) 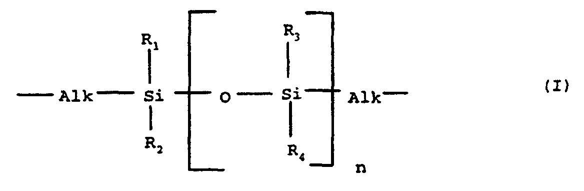 in which n is an integer from 5 to 700; Alk is alkylene having up to 20 carbon atoms; 80-100% of the radicals R₁, R₂, R₃ and R₄, independently of one another, are alkyl and 0-20% of the radicals R₁, R₂, R₃ and R₄, independently of one another, are alkenyl, aryl, fluoroalkyl or cyanoalkyl.

In a preferred meaning, n is an integer from 10 to 500, more preferably 10 to 300, particularly preferably 20 to 120 and in particular 20 to 80.

In a preferred meaning, 80-100%, preferably 85-100%, in particular 90-100%, of the radicals R₁, R₂, R₃ and R₄, are, independently of one another, lower alkyl having up to 8 carbon atoms, particularly preferably lower alkyl having up to 4 carbon atoms, especially lower alkyl having up to 2 carbon atoms. A further particularly preferred meaning of R₁, R₂, R₃ and R₄, is methyl.

In a preferred meaning, 0-20%, preferably 0-15%, in particular 0-10%, of the R₁, R₂, R₃ and R₄ are, independently of one another, lower alkenyl, unsubstituted or lower alkyl- or lower alkoxy-substituted phenyl, fluoro(lower alkyl), e.g., trifluoropropyl or cyano(lower alkyl).

According to another embodiment of the invention, the oxygen-permeable polymer in segment A comprises a perfluoroalkyl-polyether block of Formula (II)

-(E)ₖ-Z-CF₂-(OCF₂)ₓ-(OCF₂CF₂)_{y}OCF₂-Z-(E)ₖ (II)

in which x + y is a number in the range from 10 to 100; each Z, independently of the others, is a divalent radical having up to 12 carbon atoms or a bond; each E, independently of the others, is alkoxy, e.g. -(OCH₂CH₂)_{q}-, where q has a value of from 0 to 2 as a statistical average, and where the link -Z-E- represents the sequence -Z-(OCH₂CH₂)_{q}-; and k is 0 or 1.

Z is preferably a bond, lower alkylene or -CONH-arylene, in which the -CO- moiety is linked to a CF₂ group. Z is particularly preferably lower alkylene, in particular methylene.

The perfluoroalkoxy units OCF₂ and OCF₂CF₂ having the indices x and y in Formula (II) can have a random distribution. The sum of the indices x+y is preferably a number in the range from 10 to 50, particularly preferably from 10 to 30. The ratio x:y is preferably in the range from 0.5 to 1.5, in particular in the range from 0.8 to 1.2.

In another embodiment of the invention, the oxygen-permeable polymer in segment A comprises an unsaturated polymer, e.g., a polymer of a conjugated aliphatic or alicyclic diene, which may be substituted by halogen or lower alkyl, a polymer of an alkyne or dialkyne, which may be substituted by lower alkyl or trimethylsilyl, a copolymer of a conjugated diene and a hydrophilic or hydrophobic vinylic monomer, or a partially hydrated derivatives of the mentioned compounds.

Specific examples of preferred unsaturated polymers are cis-, trans, iso- or syndiotactic poly-1,2-butadiene, poly-1,4-butadiene or polyisoprene; poly-pentenamer; polychloroprene; polypiperylen; butadiene- or isoprene-copolymers with hydrophilic or hydrophobic vinylic monomers, such as acrylonitrile, styrene, acrylic acid or hydroxyethylmethacrylate; or poly-1-trimethylsilyl-propyne. An especially preferred unsaturated polymer is selected from syndiotactic poly-1,2-butadiene, poly-1,4-butadiene and polyisoprene. An especially preferred unsaturated polymer is poly-1-trimethylsilyl-propyne. Another especially preferred unsaturated polymer is poly-1,4-butadiene.

In a further embodiment of the invention, the oxygen-permeable polymer in segment A comprises a polysulfone comprising at least one of the structural elements IIIa) to IIId)

-R-SO₂- IIIa)

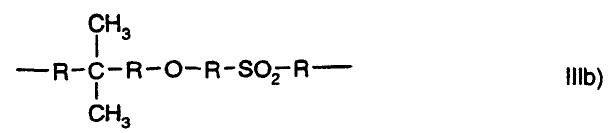

- R-SO₂-R-O- IIIc)

-R-O-R-SO₂-R-R-SO₂- IIId)

wherein R in structural element IIIa) is alkylene or arylene and R in structural elements IIIb), IIIc) and IIId) is arylene, especially phenylene.

In one embodiment of the invention, the oxygen-permeable polymer in segment A may comprise one of the polymers illustrated above. According to another embodiment, the oxygen-permeable polymer in segment A may comprise more than one kind of polymers as illustrated above, e.g., may comprise perfluoroalkylene polyether or polybutadiene subsegments (a) and polysiloxane subsegments (b).

A preferred embodiment of the invention relates to prepolymers, particularly to prepolymers for ophthalmic uses, wherein segments A have a mean molecular weight of for example in the range from about 1,000 to about 50,000, preferably in the range from about 1,500 to about 30000 and particularly preferably in the range from about 2,000 to about 20,000.

Suitable hydrophilic segments B are for example:
(i) non-ionic segments, for example a polyoxyalkylene, polysaccharid, polypeptide, poly(vinylpyrrolidone), polyalkylacrylate or methacrylate, polyhydroxyalkylacrylate or -methacrylate, polyacyl alkylene imine, polyacryl amide, polyvinyl alcohol, polyvinyl ether or polyol,
(ii) polyionic segments, for example a polycationic segment such as a polyallylammonium, polyethyleneimine, polyvinylbenzyltrimethylammonium, polyaniline, sulfonated polyaniline, polypyrrole or polypyridinium segment, or a polyanionic segment such as a polyacrylic or polymethacrylic acid, a polythiophene-acetic acid, a polystyrenesulfonic acid or a suitable salt thereof.

Some examples of preferred hydrophilic segments B are a polyethylene glycol, polypropylene glycol, poly(vinylpyrrolidone), poly(methylmethacrylate), poly(hydroxyethylacrylate), poly(hydroxyethylmethacrylate), polyacrylamide, poly(N,N-dimethylacrylamide), polyacrylic or polymethacrylic acid or a copolymeric mixture of two or more of the above-mentioned polymers, or a polyacyl alkylene imine segment which is derivable from a cyclic imino ether of formula (IV) 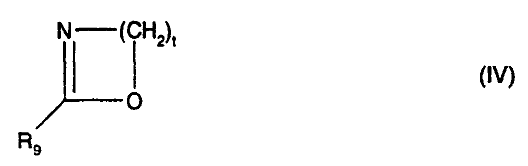 wherein R₉ represents a hydrogen atom, an alkyl, hydroxyalkyl or alkenyl group having up to 22 carbon atoms and optionally containing ether, ester or urethane groups, a cycloalkyl group, an aralkyl group or an aryl group; and t is 2 or 3. Suitable cyclic imino ether are for example 2-methyl-2-oxazoline, a 2-alkenyl oxazoline, a 2-(hydroxyalkyl)oxazoline or a 2-isocyanatoethylmethacrylate thereof.

The mean weight average molecular weight of the hydrophilic blocks B may vary within wide limits. A preferred embodiment of the invention relates to prepolymers, particularly to prepolymers for ophthalmic uses, wherein segments B have a mean molecular weight in the range from about 200 to about 10,000, preferably in the range from about 350 to about 5000 and particularly preferably in the range from about 500 to about 1,500.

The segments A and B may be linked by a direct bond which is preferably a non-hydrolizable bond, for example a 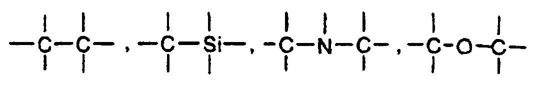 bond, or may be linked by a bridge member. A suitable bridge member is for example a carbonyl, carbonate, ester, amide, urea or urethane functional group or is for example an alkylene, cycloalkylene, aralkylene, arylene or heterocyclic group containing one or more, preferably two, of the functional groups mentioned.

The starting segments A and/or B that make up the copolymers of the invention may already contain crosslinkable groups, or said crosslinkable groups may be introduced during or preferably after the formation of the copolymers, for example by reacting reactive groups of the polymer such as amino, hydroxy or the like groups with unsaturated compounds which are coreactive to said reactive groups. Examples of such coreactive unsaturated compounds are for example acrylic acid, methacrylic acid, methacryloyl chloride, hydroxyethyl methacrylate (HEMA), 2-vinyl-4,4-dimethyl-azlactone, 2-isocyanatoethyl acrylate or -methacrylate (IEM), allyl isocyanate, vinyl isocyanate, the isomeric vinylbenzyl isocyanates or adducts of HEMA and 2,4-tolylene diisocyanate (TDI) or isophorone diisocyanate (IPDI), in particular the 1:1 adduct. The crosslinkable moieties may be attached to the segments A and/or B and preferably to segments B.

The structure of the prepolymers of the invention may vary within wide limits. They may thus consist in one embodiment of one segment A and one segment B only (diblock copolymers A-B), or of one segment A and two segments B attached to its termini (triblock copolymers B-A-B), or may have a comb-type structure wherein several segments B are pendent from one segment A (which of course may further carry one or two terminal segments B, comb-block copolymers A(-B)ᵣ), wherein A and B have the above-given meaning, r is >2, and wherein A and B may be linked by a direct bond or by an above-mentioned bridge member, and some or all of the segments A or preferably B carry a crosslinkable group, in particular a crosslinkable C-C double bond.

In another embodiment the amphiphilic segmented copolymers of the invention may consist of one segment B and two segments A attached to its termini (A-B-A-type; triblock) or may have a comb-type structure wherein several segments A are pendent from one segment B (which of course may further carry one or two terminal segments A, comb-block copolymers B(-A)ᵣ).

Some examples of preferred prepolymer materials suitable for the inventive process are the amphiphilic segmented copolymers as disclosed in PCT application WO 97/49740 or Materials "A" and "C" as disclosed in PCT application WO 96/31792. The respective portion of said two documents including the formulae, definitions and preferences given therein is herewith incorporated by reference.

One group of preferred prepolymers are those wherein segments A and B are linked by a non-hydrolizable group. According to a preferred process, said prepolymers are formed by polymerizing a suitable hydrophilic monomer (which provides segment B), for example a cyclic imino ether such as 2-methyloxazoline, a vinyl ether, cyclic ether including epoxides, cyclic unsaturated ether, N-substituted aziridine, β-lactone, β-lactame, keten acetale, vinyl acetale or phosphorane, in the presence of a suitably functionalized segment A, for example one of the above-mentioned segments A, such that a block of units of the hydrophilic monomer grows from the site of functionalization of segment A.

The segmented copolymers obtained by grafting suitable hydrophilic monomers onto a starting segment A may already contain polymerizable unsaturated groups in the hydrophobic and/or hydrophilic segments, e.g., if a hydrophobic segment A comprises a dienpolymer like polybutadiene or polyisoprene, or if the monomer used for making a hydrophilic segment comprises an unsaturated side chain, for example 2-allyl-oxazoline. If no polymerizable unsaturated groups are present or also if such groups are present, it is possible to introduce polymerizable unsaturated groups by suitable reactions, e.g. at the end of or also pendent from the growing segments. For this purpose, the graft polymerization of the growing segment may be terminated after a suitable chain length is reached and the initiator group present at the chain end is capped for example either by using specific reagents such as hydroxy styrene, allyl alcohol, HEMA, propargyl alcohol, allyl amines and propargyl amine, or by using KOH/EtOH or primary or secondary amines leaving OH or -NHR* groups or unsaturated groups at the end of the growing segment, wherein R* is e.g. hydrogen, alkyl or aryl. Hydroxyl groups may also be introduced into the copolymers by employing suitable comonomers in the graft copolymerization, e.g., 2-hydroxy-alkyl-oxazolines. The hydroxyl or -NHR* groups may then be reacted, e.g., with an isocyanate carrying a polymerizable unsaturated group. Preferred examples of such bifunctional compounds are 2-isocyanatoethyl methacrylate (IEM) which is especially preferred, and vinyl isocyanate, allyl isocyanate, acryloyl isocyanate, styrene isocyanate, vinyl benzyl isocyanate, propargyl isocyanate and (meth)acrylic anhydride.

A particularly preferred example of this embodiment of the invention is the prepolymer as shown on page 22 of WO 97/49740.

According to a further embodiment of the invention, an amphiphilic segmented copolymer having segments A and B linked together through a bridge member is employed in the process of the invention. These copolymers include for example an above-mentioned diblock-, triblock- or comb-block copolymer A-B, B-A-B or A(-B)ᵣ wherein segments A and B are connected for example by means of a carbonyl, carbonate, ester, amide, urea or urethane functional group or particularly by a bridge member -X-R*-X-, wherein X is an above-mentioned functional group and R* is for example a bivalent aliphatic, cycloaliphatic, aromatic or araliphatic group having up to 20 C atoms, for example linear or branched C₆-C₁₀-alkylene; cyclohexylene-methylene or cyclohexylene-methylene-cyclohexylene which is each unsubstituted or substituted by 1 to 3 methyl groups; or unsubstituted or methyl-substituted phenylene or phenylene-methylene-phenylene. A particularly preferred bridge member is of formula -NH-C(O)-NH-R*-NH-C(O)-NH- or -O-C(O)-NH-R*-NH-C(O)-O-, wherein R* is each as defined above.

An example of the latter type prepolymer is an amphiphilic segmented copolymer of formula

CP-PAO-DU-ALK-PDMS-ALK-DU-PAO-CP (V)

where PDMS is a divalent polysiloxane, for example a polysiloxane of the above formula (I); CP is an isocyanatoalkyl acrylate or methacylate, preferably isocyanatoethyl methacrylate, where the urethane group is bonded to the terminal carbon on the PAO group;
PAO is a divalent polyoxyalkylene (which may be substituted), and is preferably a polyethylene oxide, i.e., (-CH₂-CH₂-O-)ₘ₁CH₂CH₂- where m1 may range from about 3 to about 44, more preferably about 4 to about 24;
DU is a diurethane, preferably including a cyclic structure, for example a divalent radical which is derived from isophorone diisocyanate or toluene diisocyanate,
where an oxygen of the urethane linkage (1) is bonded to the PAO group and an oxygen of the urethane linkage (2) is bonded to the ALK group;
and ALK is an alkylene or alkylenoxy group having at least 3 carbon atoms, preferably a branched alkylene group or an alkylenoxy group having 3 to 6 carbon atoms, and most preferably a sec-butyl (i.e., -CH₂CH₂CH(CH₃)-) group or an ethoxypropoxy group (e.g., -O-(CH₂)₂-O-(CH₂)₃-).

The prepolymers according to this embodiment of invention can be prepared by processes known per se, for example according to the processes as disclosed in PCT publication WO 96/31792.

Another example of a suitable prepolymer is an amphiphilic segmented copolymer comprising at least one segment of the formula (VI): 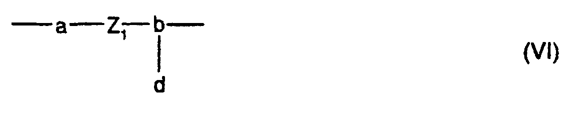 in which
(a) is a polysiloxane segment, for example a segment of the above-mentioned formula (I),
(b) is a polyol segment which contains at least 4 C atoms, Z₁ is a segment X₂-R'-X₂ or a group X₁,
R' is a bivalent radical of an organic compound having up to 20 C atoms, for example alkylene, arylene, alkylenearylene or arylenealkylene having up to 14 carbon atoms or a saturated bivalent cycloaliphatic group having 6 to 14 carbon atoms, and preferably alkylene or arylene having up to 12 carbon atoms or a saturated bivalent cycloaliphatic group having 6 to 14 carbon atoms;
each X₂ independently of the other is a bivalent radical which contains at least one carbonyl group, and is preferably an ester, amide, urethane or urea group and in particular an amide, urethane or urea group;
X₁ is is a bivalent radical which contains at least one carbonyl group and is preferably an ester, amide, urethane or urea group, in particular an ester or amide group, and
(d) is a radical of the formula (VII):

X₃-L-(Y)ₖ₁-P₁ (VII)

in which
P₁ is a group which can be polymerized by free radicals, for example alkenyl or alkenylaryl having up to 12 C atoms, more preferably alkenyl having up to 8 C atoms and in particular alkenyl having up to 4 C atoms;
Y and X₃ independently of one another are a bivalent radical which contains at least one carbonyl group; Y being preferably a carbonyl, ester, amide or urethane group and X₃ being preferably a urethane, urea, ester, amide or carbonate group, more preferably a urethane, urea, ester or amide group, and in particular a urethane or urea group,
k1 is 0 or 1; and
L is a bond or a divalent radical having up to 20 C atoms of an organic compound, for example alkylene or arylene having up to 12 C atoms and preferably alkylene having up to 4 C atoms.

If Z₁ in formula (VI) is X₁, a polyol segment b is preferably understood as meaning a polyol derived from a carbohydrate, carbohydrate monolactone or carbohydrate dilactone. A carbohydrate is understood as meaning a mono-, di-, tri-, tetra-, oligo- or polysaccharide. A carbohydrate lactone is understood as meaning the lactone of an aldonic or uronic acid. An aldonic or uronic acid is, for example, a carboxylic acid formed by oxidation of a mono-, di-, tri-, tetra-, oligo- or polysaccharide. Examples of aldonic acid lactones are gluconolactone, galactonolactone, lactobionolactone or maltoheptaonolactone; examples of uronic acid lactones are glucuronic acid lactone, mannuronic acid lactone or iduronic acid lactone. An example of a carbohydrate dilactone is D-glucaro-1,4:6,3-dilactone.

A polyol segment (b) is preferably derived from a polyol which carries no lactone group if the group Z₁ is a group X₂-R'-X₂. Examples of such polyols are a 1,2-polyol, for example the reduced monosaccharides, for example mannitol, glucitol, sorbitol or iditol, a 1,3-polyol, for example polyvinyl alcohol (PVA), which is derived from partly or completely hydrolysed polyvinyl acetate, and furthermore amino-terminal PVA telomers, aminopolyols, aminocyclodextrins, aminomono-, -di-, -tri-, -oligo- or -polysaccharides or cyclodextrin derivatives, for example hydroxypropylcyclodextrin. An abovementioned carbohydrate dilactone can be reacted, for example, with preferably 2 equivalents of an amino-terminal PVA telomer to give a polyol macromer which carries, in the central part, the carbohydrate compound derived from the dilactone. Such polyols of this composition are likewise understood to be a suitable polyol.

As illustrated in formula (VI), a segment (b) carries at least one vinylic polymerizable segment (d), a linkage of a segment (d) via the bivalent radical X₃ thereof to an amino or hydroxyl group, of a segment (b), reduced by a hydrogen atom being intended.

A vinylic polymerizable segment (d) is incorporated either terminally or pendently preferably 1-20 times, more preferably 2-15 times, and in particular 2-6 times, per macromer molecule according to the invention.

A vinylic polymerizable segment (d) is derived, for example, from acrylic acid, methacrylic acid, methacryloyl chloride, 2-isocyanatoethyl methacrylate (IEM), allyl isocyanate, vinyl isocyanate, the isomeric vinylbenzyl isocyanates or adducts of hydroxyethyl methacrylate (HEMA) and 2,4-tolylene diisocyanate (TDI) or isophorone diisocyanate (IPDI), in particular the 1:1 adduct.

The ratio of the number of segments (a) and (b) in a macromer according to formula (VI) is preferably in a range of (a):(b)=3:4, 2:3, 1:2, 1:1, 1:3 or 1:4.

The total sum of segments (a) and (b) is in a range from 2 to 50, preferably 3 to 30, and in particular in the range from 3 to 12.

The prepolymers according to formula (VI) can be prepared by processes known per se, for example according to the processes as disclosed in PCT publication No. WO 96/31792.

The molecular weight of the prepolymer employed in the process of the invention is, within wide limits, not critical. Preferably, however, the prepolymer has a weight average molecular weight of from approximately 500 to 200000, preferably from 800 to 100000 and more preferably from 1000 to 50000 and most preferably from 3000 to 25000.

The prepolymer is introduced into the process of the invention preferably in pure form, particularly substantially free from undesired constituents, such as, for example, free from monomeric, oligomeric or polymeric starting compounds used for the preparation of the prepolymer, and/or free from secondary products formed during the preparation of the prepolymer. Said prepolymers in pure form are obtained advantageously by previously purifying them in a manner known per se, for example by precipitation with a suitable solvent, filtration and washing, extraction in a suitable solvent, dialysis, reverse osmoses (RO) or ultrafiltration, reverse osmoses and ultrafiltration being especially preferred.

The preferred purification processes for the prepolymers of the invention, reverse osmoses and ultrafiltration, can be carried out in a manner known per se. It is possible for the ultrafiltration and reverse osmoses to be carried out repeatedly, for example from two to ten times. Alternatively, the ultrafiltration and reverse osmoses can be carried out continuously until the selected degree of purity is attained. The selected degree of purity can in principle be as high as desired.

### Preparation of an at least partly bicontinuous mesophase

According to the inventive process, the above-mentioned prepolymers are converted into a mesophase which is at least partly bicontinuous.

The mesophases may be prepared from a melt of one or more than one different prepolymers having the above-mentioned characteristics and optionally further components or, preferably, from one or more than one different prepolymers, an aqueous solution and optionally further components.

### (1) aqueous solution;

The aqueous solution that is added to form the mesophase may be pure water or a mixture of water and one or more water-miscible solvents and/or salts.

### (i) water-miscible organic solvents;

Examples of suitable solvents that may be added to the mesophase are a monohydric or polyhydric alcohol, for example a C₁-C₈alcohol such as n-butanol, n-propanol, ethanol or methanol or a polyhydric alcohol such as glycerol or a glycol; a polyether such as Butyl Cellosolve™, Butyl Carbitol™, Hexyl Cellosolve™, or Hexyl Carbitol™; a carboxylic acid amide, for example N,N-dimethylformamide; acetone, acetonitrile; dimethyl sulfoxide; or mixtures thereof. Preferably, the aqueous solution does not comprise any additional organic solvent or comprises a C₁-C₄alcohol, for example ethanol or methanol as additional organic solvent. In a particularly preferred embodiment of the invention, the aqueous solution does not comprise an additional organic solvent.

### (ii) salts;

Salts that may be comprised in the aqueous solution used to form the inventive mesophases include without limitation thereto physiologically tolerable salts, such as buffer salts customary in the field of contact lens care, for example phosphate salts, or isotonising agents customary in the field of contact lens care, such as alkali halides, for example sodium chloride, or mixtures thereof.

If salts are added, the aqueous salt solution has for example an osmolarity of from about 200 to 450 milliosmol in 1000 ml (unit: mOsm/l), preferably an osmolarity of from about 250 to 350 mOsm/l, and in particular about 300 mOsm/l.

An example of an especially suitable aqueous salt solution of the invention is an artificial, preferably buffered, lacrimal fluid that in respect of pH value and osmolarity is adapted to natural lacrimal fluid, for example, a sodium chloride solution that is unbuffered or that is preferably buffered, for example, by a phosphate buffer, and that has an osmolarity that corresponds to the osmolarity of human lacrimal fluid.

The aqueous solution employed for the formation of the mesophases of the invention is preferably a pure solution which means a solution which is free or essentially free from undesired constituents. Especially preferred examples of such solutions are pure water or an artificial lacrimal fluid, as defined hereinbefore.

### (2) optional further components;

Optional further components which are used for the preparation of the inventive mesophases, besides the crosslinkable amphiphilic block copolymer and the aqueous solution, are for example:

### (i) photoinitiators;

In case of photocrosslinking the mesophases of the present invention it is preferred to add a photoinitiator which can initiate radical crosslinking. Examples thereof are familiar to the person skilled in the art. Useful photoinitiators include for example benzophenones substituted with an ionic moiety, a hydrophilic moiety or both such as 4-trimethylaminomethyl benzophenone hydrochloride or benzophenone sodium 4-methanesulfonate; benzoin C₁-C₄alkyl ether such as benzoin methyl ether; thioxanthones substituted with an ionic moiety, a hydrophilic moiety or both such as 3-(2-hydroxy-3-trimethylaminopropoxy) thioxanthone hydrochloride, 3-(3-trimethylaminopropoxy) thioxanthone hydrochloride, thioxanthone 3-(2-ethoxysulfonic acid) sodium salt or thioxanthone 3-(3-propoxysulfonic acid) sodium salt; or phenyl ketones such as 1-hydroxycyclohexylphenyl ketone, (2-hydroxy-2-propyl)(4-diethylene glycol phenyl)ketone, (2-hydroxy-2-propyl)(phenyl-4-butanecarboxylate)ketone; or commercial products such as Darocure™ or Irgacure™ types, e.g. Darocure 1173 or Irgacure 2959.

The photoinitiator, if added to the mesophases of the invention, is present in an amount of for example 0.05 to about 1.5 % by weight, preferably 0.1 to 1.0 % by weight and particularly preferably 0.08 to 0.5 % by weight, based on the prepolymer content in each case.

### (ii) thermal initiators;

In case of thermally inducing the crosslinking of the mesophases of the present invention it is preferred to add a thermal initiator which, on exposure to heat, can initiate radical crosslinking. Examples thereof are familiar to the person skilled in the art. Useful thermal initiators include without limitation thereto azodiisobutyronitrile, persulfates such as potassium persulfate, ammonium persulfate, sodium persulfate, or mixtures thereof.

### (iii) redox initiators;

In case of inducing the crosslinking of the mesophases electrochemically it is preferred to add a redox initiator to the mixture that makes up the mesophase. Examples thereof are familiar to the person skilled in the art and comprise for example TiCl₃, RhCl₃, H₂O₂/Fe²⁺ or diacyl peroxides/Cu⁺.

### (iv) surfactants;

The mesophases may comprise an additional surfactant, preferably a non-polymerizable surfactant which is for example a non-ionic, anionic, cationic or zwitterionic surfactant.

Examples of suitable non-ionic surfactants are a condensation product of a higher aliphatic alcohol and ethylene oxide, for example a condensation product of a C₈-C₂₀ fatty alcohol and about 3 to 100 mols, preferably 5 to 40 mols and most preferably 5 to 20 mols of ethylene oxide (e.g. Tergitol™ 15-S surfactants from Union Carbide, Brij™ surfactants from ICI); polyethylene oxide condensates of one mole of an alkyl phenol, for example a C₆-C₁₂alkyl-phenol and about 3 to 100 mols, preferably 5 to 40 mols and most preferably 5 to 20 mols of ethylene oxide (e.g. Igepal™ CO or CA surfactants from Rhone-Poulenc which are nonylphenoxy poly(ethyleneoxy) ethanols or octylphenoxy poly(ethyleneoxy) ethanols); block copolymers of ethylene oxide and propylene oxide and/or butylene oxide (e.g. Pluronic™ or Tetronic™ surfactants from BASF); or fatty acid esters such as esters from sorbitan acid or stearic acid and a fatty alcohol or a polyethylen oxide (e.g. Span™, Tween™ or Myrj™ surfactants from ICI).

Examples of suitable anionic surfactants are alkyl or alkylaryl sulfates or sulfonates, for example C₆-C₂₀alkyl or alkylaryl sulfates such as sodium lauryl sulfate or sodium dodecyl benzene sulfonate; or polyoxyethylene (about C₆-C₂₀) alkyl or alkylphenoxy poly (ethyleneoxy) mono-esters and diesters of phosphoric acid and its salts with the ethylene oxide repeating unit in the surfactant preferably below about 30 units and most preferably below 20 units.

Examples of suitable cationic surfactants are quatemary ammonium salts in which at least one higher molecular weight group and two or three lower molecular weight groups are linked to a common nitrogen atom to produce a cation, and wherein the electrically-balancing anion is for example a halide, acetate, nitrite or lower alkylsulfate (e.g. methylsulfate). A higher molecular weight substituent on the nitrogen is for example a higher alkyl group containing about 10 to 20 carbon atoms, and a lower molecular weight substituent may be lower alkyl of about 1 to 4 carbon atoms, such as methyl or ethyl, which may be substituted for example by hydroxy. One or more of the substituents may include an aryl moiety or may be replaced by aryl or aralkyl, such as benzyl or phenyl. Among the possible lower molecular weight substituents are also lower alkyl of about 1 to 4 carbon atoms substituted by lower polyalkoxy moieties such as polyoxyethylene moieties bearing a hydroxyl group, falling within the general formula -R₂₀(CH₂CH₂-O)_{c-1}CH₂CH₂OH where R₂₀ is a divalent C₁-C₄alkylene group bonded to the nitrogen, and c represents an integer of about 1 to about 15. Alternatively, one or two of such lower polyalkoxy moieties having terminal hydroxyls may be directly bonded to the quaternary nitrogen instead of being bonded to it through the previously mentioned lower alkyl. Examples of said quatemary ammonium salts are methylbis(2-hydroxyethyl)coco-ammonium chloride, oleyl-ammonium chloride or methyl polyoxyethylene (15) octadecyl ammonium chloride (e.g. Ethoquad™ surfactants from Akzo).

A further group of suitable cationic surfactants has the formula 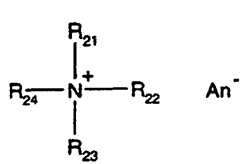 wherein R₂₁ and R₂₂, which may be the same or different, are C₁-C₄alkyl groups, preferably methyl or ethyl groups; R₂₃ and R₂₄, which may be the same or different, are C₁-C₃₀carbon groups; and An is a suitable counter-ion, for example a halide; with the proviso that at least one of R₂₁, R₂₂, R₂₃ and R₂₄ bears an addition-polymerizable group. Examples of those addition-polymerizable cationic surfactants are 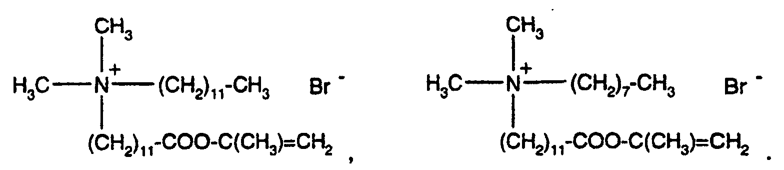 Phosphor lipids represent an example of suitable zwitterionic surfactants.

Mesophases, particularly lyotropic crystalline phases, without additional surfactant are preferred.

### (v) hydrophobic or hydrophilic comonomers or comacromers;

A comonomer or comacromer which is contained in the mesophases according to the invention can be hydrophilic or hydrophobic or a mixture of both.

Suitable comonomers include, in particular, those which are usually used for the preparation of contact lenses and biomedical materials.

A hydrophobic comonomer (a) is understood as meaning monomers which typically give, as a homopolymer, polymers which are water-insoluble and can absorb less than 10% by weight of water.

Analogously, a hydrophilic comonomer is understood as meaning a monomer which typically gives, as a homopolymer, a polymer which is water-soluble or can absorb at least 10% by weight of water.

Suitable hydrophobic comonomers include, without this list being exhaustive, C₁-C₁₈alkyl and C₃-C₁₈cycloalkyl acrylates and methacrylates, C₃-C₁₈alkylacrylamides and -methacrylamides, acrylonitrile, methacrylonitrile, vinyl C₁-C₁₈alkanoates, C₂-C₁₈alkenes, C₂-C₁₈halo-alkenes, styrene, lower alkyl styrene, lower alkyl vinyl ethers, C₂-C₁₀perfluoroalkyl acrylates and methacrylates or correspondingly partly fluorinated acrylates and methacrylates, C₃-C₁₂. perfluoroalkyl-ethyl-thiocarbonylaminoethyl acrylates and methacrylates, acryloxy- and methacryloxy-alkylsiloxanes, N-vinylcarbazole and C₁-C₁₂alkyl esters of maleic acid, fumaric acid, itaconic acid, mesaconic acid and the like. Preferred comonomers are, for example, acrylonitrile, C₁-C₄alkyl esters of vinylically unsaturated carboxylic acids having 3 to 5 carbon atoms, or vinyl esters of carboxylic acids having up to 5 carbon atoms.

Examples of suitable hydrophobic comonomers include methyl acrylate, ethyl acrylate, propyl acrylate, isopropyl acrylate, isobutyl acrylate (IBA), isooctyl acrylate (OA), isodecyl acrylate (DA), cyclohexyl acrylate, 2-ethylhexyl acrylate (EHA), methyl methacrylate, ethyl methacrylate, propyl methacrylate, butyl acrylate, vinyl acetate, vinyl propionate, vinyl butyrate, vinyl valerate, styrene, chloroprene, vinyl chloride, vinylidene chloride, acrylonitrile, 1-butane, butadiene, methacrylonitrile, vinyl toluene, vinyl ethyl ether, perfluorohexylethylthiocarbonylaminoethyl methacrylate, isobornyl methacrylate, trifluoroethyl methacrylate, hexafluoroisopropyl methacrylate, hexafluorobutyl (meth)acrylate (HFBMA and HFBA), tris-trimethylsilyloxy-silyl-propyl methacrylate (TRIS), 3-methacryloxypropylpentamethyldisiloxane and bis(methacryloxypropyl) tetramethyldisiloxane.

Preferred examples of hydrophobic comonomers are methyl methacrylate, IBA, HFBA, HFBMA, OA, EHA, DA, TRIS and acrylonitrile.

Suitable hydrophilic comonomers include, without this list being conclusive, hydroxyl-substituted lower alkyl acrylates and methacrylates, acrylamide, methacrylamide, lower alkylacrylamides and -methacrylamides, ethoxylated acrylates and methacrylates, hydroxyl-substituted lower alkylacrylamides and -methacrylamides, hydroxyl-substituted lower alkyl vinyl ethers, sodium vinylsulfonate, sodium styrenesulfonate, 2-acrylamido-2-methylpropanesulfonic acid, N-vinylpyrrole, N-vinyl-2-pyrrolidone, 2-vinyloxazoline, 2-vinyl-4,4'-dialkyloxazolin-5-one, 2- and 4-vinylpyridine, vinylically unsaturated carboxylic acids having a total of 3 to 5 carbon atoms, amino-lower alkyl (where the term "amino" also includes quaternary ammonium), mono-lower alkylamino-lower alkyl and di-lower alkylamino-lower alkyl acrylates and methacrylates, allyl alcohol and the like. Preferred comonomers are, for example, N-vinyl-2-pyrrolidone, acrylamide, methacrylamide, hydroxyl-substituted lower alkyl acrylates and methacrylates, hydroxyl-substituted lower alkylacrylamides and -methacrylamides and vinylically unsaturated carboxylic acids having a total of 3 to 5 carbon atoms.

Examples of suitable hydrophilic comonomers include hydroxyethyl methacrylate (HEMA), hydroxyethyl acrylate, hydroxypropyl acrylate, trimethylammonium-2-hydroxypropyl methacrylate hydrochloride (Blemer®QA, for example from Nippon Oil), dimethylaminoethyl methacrylate (DMAEMA), dimethylaminoethyl methacrylamide, acrylamide, methacrylamide, N,N-dimethylacrylamide (DMA), allyl alcohol, vinylpyridine, glycerol methacrylate, N-(1,1-dimethyl-3-oxobutyl)acrylamide, N-vinyl-2-pyrrolidone (NVP), acrylic acid, methacrylic acid and the like.

Preferred hydrophilic comonomers are 2-hydroxyethyl methacrylate, dimethylaminoethyl methacrylate, trimethylammonium-2-hydroxypropyl methacrylate hydrochloride, N,N-dimethylacrylamide and N-vinyl-2-pyrrolidone.

Suitable hydrophilic or hydrophobic comacromers include vinylfunctionalized oligomers, for example a vinylfunctionalized oligomer comprising an above-mentioned segment A or B such as a vinylfunctionalized polyalkylene glycol or a vinylfunctionalized polysiloxane.

Preferably, the mesophases according to step b) do not comprise any comonomer or comacromer.

### (vi) pharmaceutical effective agents;

The mesophases of the invention may contain suitable pharmaceutical effective agents, for example proteins, enzymes, vitamins, disinfectants, bactericides and the like.

In a preferred embodiment of the invention, the mesophases are prepared from and thus comprise one or more than one different inventive prepolymers; water which may contain physiologically acceptable salts; and optionally a photoinitiator and/or an additional solvent selected from the group consisting of a monohydric or polyhydric alcohol, a carboxylic acid amide, acetonitrile and dimethyl sulfoxide. Even more preferred the mesophases are prepared from and thus consist of one or more than one different prepolymers, water and optionally a photoinitiator.

The mesophases of the invention are preferably free or at least substantially free from undesired constituents, such as, for example, free from monomeric, oligomeric or polymeric starting compounds used for the preparation of the prepolymer; free from secondary products formed during the preparation of the prepolymer; and/or free from salts.

The preparation of the at least partly bicontinuous mesophases, step b), may be characterized for example as comprising the steps of:
(i) selecting ratios of the prepolymer, an aqueous solution and optionally further components that will give a microstructure which is at least partly bicontinuous;
(ii) causing or allowing the bicontinuous microstructure to form.

Suitable ratios of the prepolymer, the aqueous solution and optionally further components that will give a bicontinuous microstructure may be determined by simple experiment. For example, the components that make up the mesophase are admixed in such a way that they form a homogeneous clear phase, and the phase is then inspected under a polarizing microscope or using the SAXS (small angle X-ray scattering) or SANS (small angle neutron scattering) method. In addition, it is possible to first determine a phase diagram of the mixture of components that make up the mesophase. The phase diagram indicates the absence or presence of homogeneous mesophase areas of a given mixture and thus may be used to establish compositions which are suitable for the preparation of a bicontinuous microstructure as required.

The mesophases of the present invention may be prepared by simply admixing suitable amounts of the prepolymer, the aqueous solution and optionally further components in any order at a temperature of for example 0 to 100°C, preferably 10 to 50°C, and more preferably 15 to 40°C. The mesophases may form spontaneously or upon stirring and/or standing for a suitable period. For example, the components that make up the mesophase are mixed for about 1 minute to 1 week, preferably for 30 minutes to 5 days and most preferably 2 hours to 3 days, in order to form a mesophase which is ready for being further processed according to the invention.

According to a further embodiment of the invention, the mesophases may be obtained by preparing an emulsion from the prepolymer, the optional further components and an excess of the aqueous solution, and then distilling off water at an elevated temperature until a homogeneous transparent mesophase is formed.

According to another embodiment of the invention, a mesophase may be obtained by simply preparing a melt of the prepolymer and optionally further components in the absence of an aqueous solution which is especially suited for prepolymers having a low melting or glass transition point.

The bicontinuous mesophases of the invention comprise, for example, from 10 to 100 percent by weight of prepolymer(s), from about 0 to about 90 percent by weight of aqueous solution and from 0 to 40 percent by weight of further components. Preferably, the bicontinuous mesophases of the invention comprise from about 30 to about 85 percent by weight of prepolymer(s), from about 15 to about 70 percent by weight of aqueous solution and from 0 to 10 percent by weight of further components. Particularly preferred mesophases comprise from 30 to 75 percent by weight of prepolymer(s) and from 25 to 70 percent by weight of aqueous solution.

The mesophases according to the invention may be introduced into an opthalmic mold in a manner known per se, such as, especially, by conventional metering in, for example by extrusion. Suitable molds are generally customary contact lens molds as known in the state of the art. Thus, the contact lenses according to the invention can be manufactured, for example, in a manner known per se, for example in a conventional "spin-casting mould", as described, for example, in US-A-3 408 429, or by the so-called Full-Mold process in a static mould, as described, for example, in US-A-4347198. Appropriate molds are made, for example, from polypropylene. Quartz, sapphire glass and metals, for example, are suitable materials for re-usable molds.

The crosslinking can be triggered in the mold, for example by actinic radiation, such as, for example, UV light, or by ionising radiation, such as, for example, gamma radiation, electron radiation or X radiation. The crosslinking can where appropriate also be triggered thermally or electrochemically. Attention is drawn to the fact that the crosslinking can be carried out according to the invention in a very short time, for example in ≤ 60 minutes, preferably ≤ 20 minutes, more preferably ≤ 5 minutes even more preferably in ≤ 1 minute, especially in up to 30 seconds, especially preferably, as disclosed in the examples.

The reaction conditions are conveniently chosen such that the configuration of the bicontinuous mesophase is retained at least partly during the crosslinking. Accordingly, the molding obtained is for the most part optical clear and has a morphology which includes at least partly bicontinuous phases.

The opening of the mold such that the molding can be removed from the mold can be carried out in a manner known per se. Whereas in processes that have been proposed in the state of the art it is usually necessary at that point for purification steps to follow, for example extraction, and also steps for the hydration of the resulting moldings, especially contact lenses, such steps, although possible, are preferably not necessary in the process according to the invention.

This is because in a preferred embodiment of the invention the mesophases does not comprise any undesired low-molecular constituents. Accordingly, the crosslinked product, too, does not comprise any such constituents, and a subsequent extraction is therefore not necessary. Since the crosslinking is carried out in a substantially aqueous mesophase, subsequent hydration is not necessary. Those two advantages mean, inter alia, that a complicated after-treatment of the resulting moldings, especially contact lenses, is dispensed with. The contact lenses obtainable in accordance with the process according to the invention are therefore, according to an advantageous embodiment, distinguished by the fact that they are suitable for their intended use without extraction. "Intended use" in this context means especially that the contact lenses can be used in the human eye. The contact lenses obtainable in accordance with the process according to the invention are, according to an advantageous embodiment, also distinguished by the fact that they are suitable for their intended use without hydration.

The process according to the invention is therefore outstandingly well suited to the economical manufacture of a large number of moldings, such as contact lenses, in a short time. Further examples of moldings are biomedical articles, in particular ophthalmic moldings, for example artificial come as, intraocular lenses or eye bandages. Still further moldings which are obtainable according to the claimed process are moldings that can be used in surgery, such as heart valves, artificial arteries or the like; catalysts; and also coatings, films or membranes, for example membranes for diffusion control, photostructurizable films for information storage, or photoresist materials, for example membranes or moldings for etch resist or screen printing resists, furthermore particles, in particular microparticles, capsules, in particular microcapsules, films and plasters for drug delivery systems.

The process of the invention is especially suitable for the manufacture of mass-produced articles, such as, for example, contact lenses that are worn for a short time, for example for a month, a week or just one day, and are then replaced by new lenses. This is in particular because the contact lenses prepared according to the invention can be used for their intended use without subsequent treatment steps, such as extraction or hydration. In addition, the contact lenses obtainable according to the process of the invention have a range of unusual and extremely advantageous properties and are therefore suited to extended periods of wear (true extended wear, i.e., seven days or more). Among these properties are, for example, their excellent compatibility with the human cornea and with tear fluid, if necessary after suitable surface treatment (e.g. coating), which is based on a balanced ratio between water content, oxygen permeability and mechanical and absorptive properties. This results in high comfort and the absence of irritation and allergenic effects. Owing to their favourable permeability properties with respect to gases (CO₂ and O₂), various salts, nutrients, water and diverse other components of tear fluid, the contact lenses prepared according to the process of the invention have no effect, or virtually no effect, on the natural metabolic processes in the cornea. Furthermore, the contact lenses obtainable according to the process are optical clear and transparent, have a high shelf life and good mechanical properties, for example concerning the modulus of elasticity, elongation at break or dimensional stability. All the advantages mentioned above naturally apply not only to contact lenses but also to other moldings according to the invention.

In the following Examples, unless expressly stated otherwise amounts are amounts by weight, and temperatures are in degrees Celsius.

### Preparation of a Macroinitiator

**Example 1:** In a 250 ml round bottom two-necked flask provided with a Soxhlet extractor with condenser and a septum on the second ground joint, the Soxhlet extractor being filled with molecular sieve (4 Å), 29.5 g (6.34 mmol) α,ω-bis(3-hydroxypropyl)-polydimethylsiloxane (IM 15 by Wacker Chemie, Munich, Germany, purified over a thin-film evaporator, 0.43 mEq OH/g, Mₙ = 4651) are dissolved in 90 ml hexane and distilled under reflux for 17 hours in a nitrogen atmosphere. The solution then still contains 21 ppm of water. Subsequently, the solution is concentrated to 60 ml hexane, cooled to 0°C and 3.60 g (45.5 mmol) pyridine are added. Then 12.4 g (43.9 mmol) trifluoromethanesulfonic acid anhydride (Fluka Chemie AG, Buchs, Switzerland) are added over 15 minutes and the mixture is stirred for another 30 minutes at a temperature of 0°C. After the addition of 20 ml chloroform (water content < 10 ppm), the suspension is filtered under vacuum using a G4 glass filter funnel and is then evaporated at high vacuum (0.6 - 2 mbar). The yield is 18 g of an oil of orange colour. This oil is in tum dissolved in 40 ml of dry hexane (water content < 10 ppm), activated charcoal is added and the mixture is then stirred for about 2 minutes and filtered again. After evaporation of the solution the yield is 15.8 g of a dear, colourless oil. ¹H-NMR (CDCl₃, 250 MHz); 0 ppm (CH₃-Si), 0.5 ppm (-CH₂-CH₂-Si-), 1.8 ppm (-CH₂-CH₂-CH₂-), 4.4 ppm (CF₃SO₃CH₂-CH₂-)
Functionality: > 95% (based on the ¹H-NMR data), i.e. > 0.40 mEq triflate/g.

### Preparation of an Amphiphilic Segmented Copolymer

**Example 2**: 2.22 g (26.1 mmol) 2-methyl-2-oxazoline and 6.94 g (1.4 mmol) of the macroinitiator prepared in Example 1 are added to 15 ml 1,2-dichloroethane (water content 5 ppm) at room temperature. After the solution has been stirred for 1.5 hours at room temperature, the temperature is increased to 40°C. After 48 hours the solution is cooled to room temperature and 5.5 ml 0.5 N KOH/EtOH solution are added. This solution is then stirred for one hour and subsequently evaporated at high vacuum (0.6 - 2 mbar).
¹H-NMR; 0 ppm (CH₃-Si), 2.0-2.1 ppm (CH₃CON <), 3.3-3.5 ppm (> N-CH₂-CH₂-N <)

| | |
|---|---|
| Functionality | OH titration: 0.40 mEq/g |
| | Titration of residual cationic terminal groups: 0.02 mEq/g |
| GPC in THF | 1 peak with shoulder against lower molecular weights, maximum peak at about 6500 based on polystyrene as a standard. |

### Preparation of a Functionalized Amphiphilic Segmented Copolymer

**Example 3:** In a round bottomed flask, 6.62 g (2.64 mEq) of the amphiphilic segmented copolymer obtained in Example 2 are dissolved at room temperature in 20 ml dry ethyl acetate (water content < 10 ppm) and 420 mg (2.7 mmol) 2-isocyanato-ethylmethacrylate (IEM) and about 40 mg dibutyltin dilaureate are added. The solution is stirred for 48 hours in the absence of light and is then evaporated at high vacuum (0.6 - 2 mbar) for 5 hours at a temperature of 0°C. 6.89 g of a colourless solid macromer which is believed to conform to formula 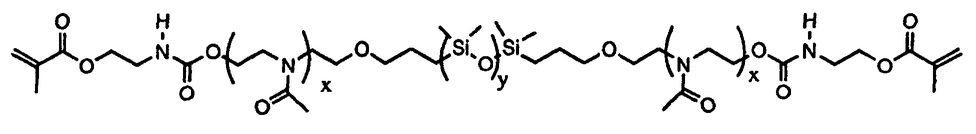 are obtained (x = 13, y = 63)

| | |
|---|---|
| Functionality | OH titration: 0.11 mEq/g (27.5% of the OH-groups are unreacted) |
| GPC in THF | 2 peaks, maximum peaks at 400 (small peak) and 6500 based on polystyrene as a standard. |

**Examples 4-14:** Further amphiphilic segmented copolymers (ASC) are prepared according to the procedure of Examples 1-3 but using different amounts of the starting materials and α,ω-bis(2-hydroxyethoxypropyl)-polydimethylsiloxane (Shin-Etsu) instead of α,ω-bis(3-hydroxypropyl)-polydimethylsiloxane. The compositions are summarized in Table 1.

**Table 1**

| Example | Average molecular weight Mₙ α,ω-bis(2-hydroxyethoxypropyl)-polydimethylsiloxane (PDMS) | Amount [g] PDMS | Amount [g] 2-methyl-2-oxazoline (PMOXA) | Ratio PDMS/PMOXA | Amount[g] IEM |
|---|---|---|---|---|---|
| 4 | 5100 | 2.7 | 0.96 | 2.8 | 0.2 |
| 5 | 5100 | 16.4 | 6.1 | 2.7 | 1.0 |
| 6 | 5100 | 10.6 | 5.8 | 1.8 | 0.6 |
| 7 | 2400 | 8.1 | 3.8 | 2.1 | 1.0 |
| 8 | 3300 | 11.7 | 7.9 | 1.5 | 1.1 |
| 9 | 5100 | 25.4 | 8.8 | 2.9 | 1.8 |
| 10* | 5100 | 9.5 | 3.5 | 2.7 | 0.7 |
| 11 | 5100 | 10.6 | 5.7 | 1.9 | 0.6 |
| 12 | 5100 | 12.6 | 9.1 | 1.4 | 0.8 |
| 13 | 5100 | 5.2 | 0.9 | 5.8 | 0.3 |
| 14 | 5100 | 14.7 | 6.3 | 2.3 | 0.8 |

| | | | | | |
|---|---|---|---|---|---|
| * The cationic ringopening polymerization was conducted at 70°C for 2 h followed by room temperature over night instead of employing the treatment as given in Example 2. | | | | | |

### Preparation of an ophthalmic molding

**Example 15:** 1.11 g ASC according to Example 5 are mixed with 1.09 g deionized water and 1% by weight relative to the amount of water of Irgacure 2959. After 4 days of mixing the formulation is centrifuged and filled into polypropylene molds and cured with UV light at an intensity of 2.4 mW/cm² for 15 minutes. After curing the moldings obtained are extracted in isopropanol for 60 h, reequilibrated into water and autoclaved at 120°C. The moldings are clear and have a high ion permeability and oxygen permeability value (for determination see for example PCT publication WO 96/31792) and also a good mechanical stability.

**Examples 16-27:** Further moldings are obtained by mixing the amounts of ASC, deionized water, photoinitiator (Irgacure 2959) and optional further components as given in Table 2, filling the mixture into polypropylene molds, curing with UV light at an intensity of 2 mW/cm² at 310 nm for 90 s and removing the resulting moldings from the molds.

**Table 2:**

| Example No. | ASC of Example | Amount of ASC [% by weight] | Amount of water [% by weight] | Amount of initiator [% by weight] | Further components/ [amount in % by weight] |
|---|---|---|---|---|---|
| 16 | 9 | 60.0 | 40.0 | - | - |
| 17 | 10 | 60.0 | 39.7 | 0.3 | - |
| 18 | 11 | 50.0 | 49.5 | 0.5 | - |
| 19 | 12 13 | 16.0 64.0 | 19.9 | 0.1 | - |
| 20 | 12 | 55.0 | 44.9 | 0.1 | - |
| 21 | 11 | 66.6 | 28.5 | 0.1 | 4.8 DMA |
| 22 | 11 | 66.5 | 28.5 | 0.1 | 4.9 TRIS |
| 23 | 11 | 63.6 | 27.2 | 0.1 | 9.1 Cetyltrimethylammonium chloride |
| 24 | 11 | 66.5 | 28.5 | 0.1 | 4.9 Brij™ 30 surfactant |
| 25 | 11 | 63.6 | 27.3 | 0.1 | 9.0 1-propanol |
| 26 | 11 | 58.8 | 25.1 | 0.1 | 7.7 TRIS, 8.3 ethanol |
| 27 | 9 | 55.0 | 43.5 | 0.5 | 1.0 vitamin E |

The moldings obtained are extracted in each case in isopropanol over night, reequilibrated into water and autoclaved at 121°C for 30 minutes. The moldings are clear in each case and have a high oxygen permeability and ion permeability value and also a good mechanical stability.

**Examples 28-29:** Moldings are prepared according to Examples 19 or 20 with the exception that the extraction and reequilibration are omitted in each case. The resulting moldings are likewise clear and have a high oxygen permeability and ion permeability value.

**Example 30:** A molding is prepared according to Example 17, with the exception that the ASC is previously purified as follows: 4.5 g of the ASC of Example 10 are dissolved in 370 ml of ethanol. 105 ml of the solution obtained are poured into a reverse osmosis filtration unit (Millipore Corp.) equipped with a regenerated cellulose membrane (molecular weight cut off of 1000) on a polypropylene support (Millipore Corp.). The filtration is conducted at 80 psi. After about 10 h the yield is 66 % and the low molecular weight components have been removed from the macromer. The molding is then prepared without subsequent extraction and reequilibration; it is clear and has a high oxygen permeability and ion permeability value.

### Example 31:

(i) Preparation of a macromer: A mixture of 10.0 g of polyethylene glycol methacrylate (Mn= 400, Polyscience) in 17,5 ml of dry methylene chloride is added dropwise over 1.5 hours to 16.7 g of isophorone diisocyanate (IPDI) in 21.6 g 1,2-dichloroethane and 5 drops of dibutyltin dilaurate (DBTDL) (0.07g). The reaction is stopped after 20 h and the product is extracted twice with dry hexane. Afterwards the resulting PEG-Methacrylate-IPDI product is stabilized with 2400 ppm of 2,6-di.tert.-butyl-p-cresol (BHT).
5.0 g of α,ω-bis(2-hydroxyethoxypropyl)-polydimethylsiloxane (Mₙ = 2000, Shin-Etsu) are dried by azeotropic distillation in methylene chloride. Afterwards 3.6 g of the above PEG-Methacrylate-IPDI and 25 drops of DBTDL are added. The mixture is kept for about 1 day at 40 °C. Then 0.0008 g phenothiazole in 1 g methylene chloride are added and the solvent is evaporated.

Preparation of an ophthalmic molding: 1.3 g of the above prepared macromer are mixed with 0.70 g deionized water and 0.035% by weight relative to the amount of water of Irgacure 2959. The mixture is filled into polypropylene molds and cured for 45 s with UV light at an intensity of 2 mW/cm² at 310 nm with a Macam lamp (400W). The resulting molding is optical clear.

### Example 32:

(i) Preparation of a macromer: 5.0 g of α,ω-bis(2-hydroxyethoxypropyl)-polydimethylsiloxane(Mₙ = 2000, Shin-Etsu) in 20 g of dry methylene chloride are added dropwise to a mixture of 1.0 g IPDI, 5.0 g methylene chloride and 10 drops of DBTDL during 35 min. The reaction is kept for 4.5 h at 40 °C (IPDI-PDMS-IPDI). A mixture of 1.93 g of polyethylene glycol acrylate (PEG-Acrylate, Mn = 375, Aldrich) and 20 ml of methylene chloride is then added dropwise to the IPDI-PDMS-IPDI solution with an extra 20 drops of DBTDL. The reaction is kept at room temperature while adding another 10 drops of DBTDL after 16.5 hours, another 0.4 g of PEG-Acrylate with 5 drops of DBTDL after 24 hours, and another 0.1g of PEG-Acrylate with 5 drops of DBTDL after another 65 hours. The reaction mixture is kept for another 2 hours at room temperature, and the solvent is then evaporated.

Preparation of an ophthalmic molding: 1.3 g of the above prepared macromer are mixed with 0.71 g deionized water and 0.035% by weight relative to the amount of water of Irgacure 2959. The mixture is filled into polypropylene molds and cured for 30 s with UV light at an intensity of 2 mW/cm² at 310 nm with a Macam lamp (400W). The resulting molding is clear and has a high ion permeability and oxygen permeability value.

**Example 33**: 0.3 g of the polymers of Examples 14 or 31 are heated in each case between quartz plates for 10 min at 101 °C. Afterwards the clear nicely spread polymer melts are UV irradiated for 3 min with 2 mW/cm² at 310 nm with a Macam lamp (400W). The obtained clear films are hydrated in water and stay clear in each case.

**Example 34:** The ophthalmic moldings of Example 16 and 19 are analysed by small angle x-ray scattering (SAXS). According to their defraction pattern, the molding of Example 16 has a lamellar morphology and that of Example 19 has a hexagonal morphology.

**Example 35:** 70 wt% of ACS from Example 11 are mixed with 29.8 wt% 300mOsm/l phosphate buffered saline and 0.2 wt% Irgacure 2959. The mixture is filled into polypropylene molds, cured with UV light at an intensity of 2 mW/cm² at 310 nm for 90 s, and the resulting moldings are removed from the molds. The moldings are clear and have a high ion permeability and an oxygen permeability value.

## Claims

1. A process for the manufacture of a molding which is an ophthalmic molding, a membrane, a catalyst or a molding useful in surgery, which comprises the following steps:
a) providing at least one prepolymer comprising one or more crosslinkable groups, wherein the prepolymer is an amphiphilic segmented copolymer comprising at least one hydrophobic segment A and one hydrophilic segment B;
b) preparing an at least partly bicontinuous mesophase of the prepolymer;
c) introducing the mesophase obtained into an mold;
d) triggering of the crosslinking; and
e) opening the mold such that the molding can be removed.

2. A process according to claim 1, for the manufacture of an ophthalmic molding, wherein the mold in step c) is an ophthalmic mold.

3. A process according to claim 1 or 2, wherein the prepolymer has a weight average molecular weight of from 1000 to 50000.

4. A process according to any one of claims 1 to 3, wherein the hydrophobic segment A of the prepolymer is a polysiloxane or perfluoropolyalkyl ether.

5. A process according to any one of daims 1 to 4, wherein the hydrophilic segment B of the prepolymer is a non-ionic segment selected from the group consisting of a polyoxyalkylene, polysaccharid, polypeptide, poly(vinylpyrrolidone), polyalkylacrylate and -methacrylate, polyhydroxyalkylacrylate and -methacrylate, polyacyl alkylene imine, polyacryl amide, polyvinyl alcohol, polyvinyl ether and polyol, or is a polycationic segment selected from the group consisting of a polyallylammonium, polyethyleneimine, pplyvinylbenzyltrimethylammonium, polyaniline, sulfonated polyaniline, polypyrrole and polypyridinium segment, or is a polyanionic segment selected from the group consisting of a polyacrylic and polymethacrylic acid, a polythiophene-acetic acid, a polystyrenesulfonic acid and a suitable salt thereof.

6. A process according to any one of claims 1 to 5, wherein segments A and B of the prepolymer are linked by a non-hydrolizable bond or by a bridge member selected from the group consisting of a carbonyl, carbonate, ester, amide, urea or urethane functional group and an alkylene, cycloalkylene, aralkylene, arylene or heterocyclic group containing one or two of the functional groups mentioned.

7. A process according to any one of claims 1 to 6, wherein the prepolymer contains segments A and B linked together through a non-hydrolizable bond, and segment A comprises a polysiloxane block having terminal alkylene groups of the formula 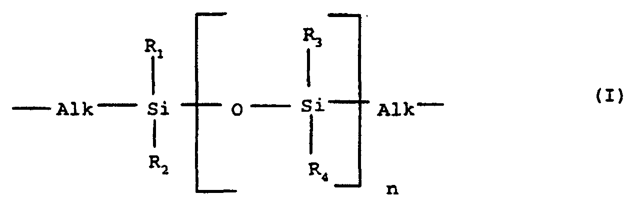 in which n is an integer from 5 to 700; Alk is alkylene having up to 20 carbon atoms; 80-100% of the radicals R₁, R₂, R₃ and R₄, independently of one another, are alkyl and 0-20% of the radicals R₁, R₂, R₃ and R₄, independently of one another, are alkenyl, aryl, fluoroalkyl or cyanoalkyl.

8. A process according to claim 7, wherein segment B of the prepolymer is a polyacyl alkylene imine segment which is derivable from a cyclic imino ether of Formula (IV) 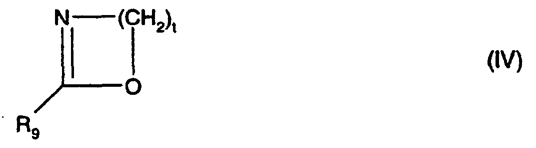 wherein R₉ represents a hydrogen atom, an alkyl, hydroxyalkyl or alkenyl group having up to 22 carbon atoms and optionally containing an ether, ester or urethane group, a cycloalkyl group, an aralkyl group or an aryl group; and t is 2 or 3.

9. A process according to claim 8, wherein the cyclic imino ether is 2-methyl-2-oxazoline, a 2-alkenyl oxazoline, a 2-(hydroxyalkyl)oxazoline or a 2-isocyanatoethylmethacrylate thereof.

10. A process according to any one of claims 1 to 6, wherein the prepolymer is of the formula
CP-PAO-DU-ALK-PDMS-ALK-DU-PAO-CP (V)
where PDMS is a divalent poly(disubstituted siloxane);
CP is an isocyanatoalkyl acrylate or methacylate where the urethane group is bonded to the terminal carbon on the PAO group;
PAO is a divalent polyoxyalkylene;
DU is a diurethane;
where an oxygen of the urethane linkage (1) is bonded to the PAO group and an oxygen of the urethane linkage (2) is bonded to the ALK group;
and ALK is an alkylene or alkylenoxy group having at least 3 carbon atoms.

11. A process according to any one of claims 1 to 6, wherein the prepolymer comprises at least one segment of the formula (VI): 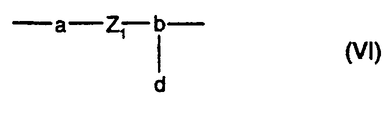 in which
(a) is a polysiloxane segment,
(b) is a polyol segment which contains at least 4 C atoms,
Z₁ is a segment X₂-R'-X₂ or a group X₁,
R' is a bivalent radical of an organic compound having up to 20 C atoms and
X₁ and each X₂ independently of the other are a bivalent radical which contains at least one carbonyl group, and
(d) is a radical of the formula (VII):
X₃-L-(Y)ₖ₁-P₁ (VII)
in which
P₁ is a group which can be polymerized by free radicals;
Y and X₃ independently of one another are a bivalent radical which contains at least one carbonyl group;
k1 is 0 or 1; and
L is a bond or a divalent radical having up to 20 C atoms of an organic compound.

12. A process according to any one of claims 1 to 11, wherein the mesophase is prepared from one or more prepolymers, an aqueous solution and optionally further components.

13. A process according to any one of claims 1 to 12, wherein the aqueous solution comprises pure water or a mixture of water and one or more water-miscible solvents and/or salts.

14. A process according to claim 12 or 13, wherein the optionally further components are selected from the group consisting of a photoinitiator, a thermal initiator, a redox initiator, a surfactant, a comonomer, a comacromer and a pharmaceutical effective agent.

15. A process according to any one of claims 1 to 14, wherein the mesophase is prepared from one or more than one different prepolymers; water which may contain physiologically acceptable salts; and optionally a photoinitiator and/or an additional solvent selected from the group consisting of a monohydric or polyhydric alcohol, a polyether, a carboxylic acid amide, acetone, acetonitrile and dimethyl sulfoxide.

16. A process according to any one of claims 1 to 15, wherein the mesophase is prepared from one or more than one different prepolymers, water and optionally a photoinitiator.

17. A process according to any one of claims 1 to 16, wherein the preparation of the mesophase comprises the steps:
i) selecting ratios of the prepolymer, an aqueous solution and optionally further components that will give a microstructure which is at least partly bicontinuous; and
(ii) causing or allowing the bicontinuous microstructure to form.

18. A process according to claim 17, wherein the bicontinuous microstructure is caused to form by admixing the prepolymer, the aqueous solution and the optionally further components and keeping the mixture at a temperature of 0 to 100°C for a time period from 1 minute to 1 week with optional stirring.

19. A process according to any of claims 1 to 11, wherein the formation of the mesophase comprises preparing a melt of one or more prepolymers and optionally further components.

20. A process according to any one of claims 1 to 19, wherein the mesophase obtained according to to step b) is of a crystalline structure, preferably of a lamellar, hexagonal or cubic structure and particularly preferably of a cubic structure.

21. A process according to any one of claims 1 to 20, wherein the crosslinking is carried out for a time period of ≤ 60 minutes.

22. A process according to any one of claims 1 to 21, wherein the molding is a contact lens.

## Patentansprüche

1. Verfahren zur Herstellung eines Formkörpers, der ein ophthalmischer Formkörper, eine Membran, ein Katalysator oder ein Formkörper, der zur Anwendung in der Chirurgie verwendbar ist, ist, wobei das Verfahren die folgenden Schritte umfaßt:
a) Bereitstellen zumindest eines Präpolymers, das eine oder mehrere versetzbare Gruppen umfaßt, wobei das Präpolymer ein amphiphiles segmentiertes Copolymer ist, das zumindest ein hydrophobes Segment A und ein hydrophiles Segment B umfaßt;
b) Herstellung einer zumindest teilweise bikontinuierlichen Mesophase des Präpolymers;
c) Einführen der erhaltenen Mesophase in eine Form;
d) Auslösen der Vernetzung und
e) Öffnen der Form, so daß der Formkörper entfernt werden kann.

2. Verfahren nach Anspruch 1 zur Herstellung eines ophthalmischen Formkörpers, wobei die Form in Schritt c) eine ophthalmische Form ist

3. Verfahren nach Anspruch 1 oder 2, wobei das Präpolymer ein gewichtsmittleres Molekulargewicht von 1.000 bis 50.000 aufweist.

4. Verfahren nach einem der Ansprüche 1 bis 3, wobei das hydrophobe Segment A des Präpolymers ein Polysiloxan oder Perfluorpolyalkylehter ist.

5. Verfahren nach einem der Ansprüche 1 bis 4, wobei das hydrophile Segment B des Präpolymers ein nicht ionisches Segment ist, das aus der Gruppe ausgewählt wurde, die aus einem Polyoxyalkylen, Polysaccharid, Polypeptid, Poly(vinylpyrrolidon), Polyalkylacrylat und -methacrylat, Polyhydroxyalkylacrylat und-methacrylat, Polyacylalkylenimin, Polyacrylamid, Polvinylalkohol, Polyvinylether und Polyol besteht; oder ein polykationisches Segment ist, das aus der Gruppe ausgewählt ist, die aus einem Polyallylammonium, Polyethylenimin, Polyvinylbenzyltrimethylammonium, Polyanilin, sulfoniertem Polyanilin, Polypyrrol und Polypyridiniumsegment besteht, oder ein polyanionisches Segment ist, das aus der Gruppe ausgewählt ist, die aus einer Polyacryl- und Polymethacrylsäure, einer Polythiophenessigsäure, einer Polystyrensulfonsäure und einem geeigneten Salz hiervon besteht.

6. Verfahren nach einem der Ansprüche 1 bis 5, wobei die Segmente A und B des Präpolymers durch eine nicht hydrolysierbare Bindung oder durch ein Brückenglied verbunden sind, das aus der Gruppe ausgewählt wurde, die aus einer Carbonyl-, Carbonat-, Ester-, Amid-, Harnstoff- oder Urethan-funktionellen Gruppe und einer Alkylen-, Cycloalkylen-, Aralkylen-, Arylen- oder heterocyclischen Gruppe, die ein oder zwei der genannten fimktionellen Gruppen enthält, besteht.

7. Verfahren nach einem der Ansprüche 1 bis 6, wobei das Präpolymer die Segmente A und B enthält, die miteinander durch eine nicht hydrolysierbare Bindung verbunden sind, und Segment A einen Polysiloxanblock mit Alkylenendgruppen der Formel 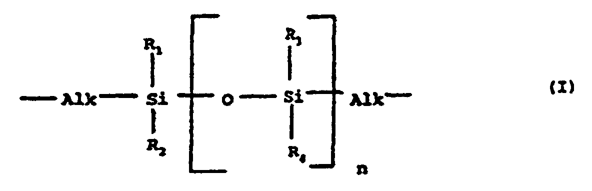 umfaßt,
worin n eine ganze Zahl zwischen 5 und 700 ist, Alk für Alkylen mit bis zu 20 Kohlenstoffatomen steht, 80 bis 100 % der Reste R₁, R₂, R₃ und R₄ unabhängig voneinander Alkyl sind und 0 bis 20 % der Reste R₁, R₂, R₃ und R₄ unabhängig voneinander Alkenyl, Aryl, Fluoralkyl oder Cyanoalkyl sind.

8. Verfahren nach Anspruch 7, wobei Segment B des Präpolymers ein Polyacylalkyleniminsegment ist, das von einem cyclischen Iminoether der Formel (IV) 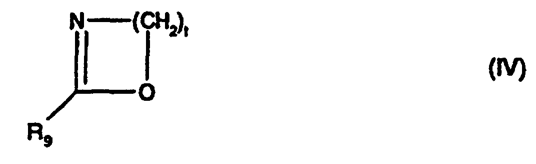 abstammt,
worin R₉ ein Wasserstoffatom, eine Alkyl-, Hydroxyalkyl- oder Alkenylgruppe mit bis zu 22 Kohlenstoffatomen darstellt und gegebenenfalls eine Ether-, Ester- oder Urethangruppe, eine Cycloalkylgruppe, eine Aralkylgruppe oder eine Arylgruppe enthält, und t 2 oder 3 ist.

9. Verfahren nach Anspruch 8, wobei der cyclische Iminoether 2-Methyl-2-oxazolin, ein 2-Alkenyloxazolin, ein 2-(Hydroxyalkyl)oxazolin oder ein 2-Isocyanatethylmethacrylat hiervon ist.

10. Verfahren nach einem der Ansprüche 1 bis 6, wobei das Präpolymer eines der Formel
CP-PAO-DU-ALK-PDMS-ALK-DU-PAO-CP (V)
ist,
worin PDMS ein zweiwertiges Poly(disubstituiertes Siloxan) ist;
CP ein Isocyanatalkylacrylat oder -methacrylat ist, worin die Urethangruppe an den endständigen Kohlenstoff der PAO-Gruppe gebunden ist;
PAO ein zweiwertiges Polyoxyalkylen ist,
DU ein Diurethan ist,
worin ein Sauerstoff der Urethanbindung (1) an die PAO-Gruppe gebunden ist und ein Sauerstoff der Urethanbindung (2) an die ALK-Gruppe gebunden ist und
ALK eine Alkylen- oder Alkylenoxygruppe mit zumindest 3 Kohlenstoffätomen ist.

11. Verfahren nach einem der Ansprüche 1 bis 6, wobei das Präpolymer zumindest ein Segment der Formel (VI): 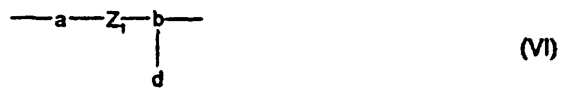 umfaßt, worin
(a) ein Polysiloxansegment ist,
(b) ein Polyolsegment ist, das zumindest 4 Kohlenstoffatome enthält,
Z₁ ein Segment X₂-R'-X₂ oder eine Gruppe X₁ ist,
R' ein zweiwertiger Rest einer organischen Verbindung mit bis zu 20 Kohlenstoffatomen ist und
X₁ und jedes X₂ unabhängig von den anderen ein zweiwertiger Rest ist, der zumindest eine Carbonylgruppe enthält,
(d) ein Rest der Formel (VII) ist
X₃-L(Y)ₖ₁-P₁ (VII)
worin
P₁ eine Gruppe ist, die durch freie Radikale polymerisiert werden kann;
Y und X₃ unabhängig voneinander ein zweiwertiger Rest sind, der zumindest eine Carbonylgruppe enthält,
k1 0 oder 1 ist und
L eine Bindung oder ein zweiwertiger Rest mit bis zu 20 Kohlenstoffatomen einer organischen Verbindung ist.

12. Verfahren nach einem der Ansprüche 1 bis 11, wobei die Mesophase aus einem oder mehreren Präpolymeren, einer wässerigen Lösung und gegebenenfalls weiteren Komponenten hergestellt wird.

13. Verfahren nach einem der Ansprüche 1 bis 12, wobei die wässerige Lösung reines Wasser oder ein Gemisch aus Wasser und einem oder mehreren mit Wasser mischbaren Lösungsmitteln und/oder Salzen umfaßt.

14. Verfahren nach Anspruch 12 oder 13, wobei die optionalen weiteren Komponenten aus der Gruppe ausgewählt werden, die aus einem Photoinitiator, einem thermischen Initiator, einem Redoxinitiator, einem oberflächenaktiven Stoff, einem Comonomer, einem Comakromer und einem pharmazeutischen Wirkstoff besteht.

15. Verfahren nach einem der Ansprüche 1 bis 14, wobei die Mesophase aus einem oder mehreren verschiedenen Präpolymeren; Wasser, das physiologisch akzeptable Salze enthalten kann; und gegebenenfalls einem Photoinitiator und/oder einem zusätzlichen Lösungsmittel, das aus der Gruppe ausgewählt wird, die aus einem einwertigen oder mehrwertigen Alkohol, einem Polyether, einem Carbonsäureamid, Aceton, Acetonitril und Dimethylsulfoxid besteht, hergestellt wird.

16. Verfahren nach einem der Ansprüche 1 bis 15, wobei die Mesophase aus einem oder mehreren verschiedenen Präpolymeren, Wasser und gegebenenfalls einem Photoinitiator hergestellt wird.

17. Verfahren nach einem der Ansprüche 1 bis 16, wobei die Herstellung der Mesophase die Schritte:
i) Auswahl von Mengen des Präpolymers, der wässerigen Lösung und gegebenenfalls weiteren Komponenten, die eine zumindest teilweise bikontinuierliche Mikrostruktur ergeben werden und
(ii) Auslösen oder Zulassen der Bildung einer bikontinuierlichen Mikrostruktur umfaßt.

18. Verfahren nach Anspruch 17, wobei die Bildung der bikontinuierlichen Mikrostruktur dadurch ausgelöst wird, daß das Präpolymer, die wässerige Lösung und gegebenenfalls weitere Komponenten gemischt werden und das Gemisch bei einer Temperatur von 0 bis 100 °C für einen Zeitraum von einer Minute bis 1 Woche, gegebenenfalls unter Rühren, gehalten wird.

19. Verfahren nach einem der Ansprüche 1 bis 11, wobei die Bildung der Mesophase die Herstellung einer Schmelze aus einem oder mehreren Präpolymeren und gegebenenfalls weiteren Komponenten umfaßt.

20. Verfahren nach einem der Ansprüche 1 bis 19, wobei die Mesophase, die gemäß Schritt b) erhalten wurde, eine kristalline Struktur aufweist, vorzugsweise eine lamellare, hexagonale oder kubische Struktur und besonders bevorzugt eine kubische Struktur.

21. Verfahren nach einem der Ansprüche 1 bis 20, wobei die Vernetzung in einem Zeitraum von ≤ 60 Minuten durchgeführt wird.

22. Verfahren nach einem der Ansprüche 1 bis 21, wobei der Formkörper eine Kontaktlinse ist

## Revendications

1. Procédé de fabrication d'un article moulé, qui est un article moulé ophtalmique, une membrane, un catalyseur ou un article moulé utile en chirurgie, qui comprend les étapes suivantes :
a) fournir au moins un prépolymère comprenant un ou plusieurs groupes réticulables, dans lequel le prépolymère est un copolymère amphiphile segmenté comprenant au moins un segment hydrophobe A et un segment hydrophile B ;
b) préparer une mésophase du prépolymère au moins partiellement bicontinue ;
c) introduire la mésophase obtenue dans un moule ;
d) déclencher la réticulation ; et
e) ouvrir le moule afin de pouvoir retirer l'article moulé.

2. Procédé suivant la revendication 1, pour la fabrication d'un article moulé ophtalmique dans lequel, dans l'étape c), le moule est un moule ophtalmique.

3. Procédé suivant la revendication 1 ou 2, dans lequel le prépolymère a un poids moléculaire moyen en poids de 1000 à 50 000.

4. Procédé suivant l'une quelconque des revendications 1 à 3, dans lequel le segment hydrophobe A du prépolymère est un polysiloxane ou un éther de perfluoropolyalkyle.

5. Procédé suivant l'une quelconque des revendications 1 à 4, dans lequel le segment hydrophile B du prépolymère est un segment non ionique choisi dans le groupe constitué par un polyoxyalkylène, un polysaccharide, un polypeptide, la poly(vinylpyrrolidone), un polyalkyl-acrylate et -méthacrylate, un polyhydroxyalkyl-acrylate et -méthacrylate, une polyacylalkylèneimine, un polyacrylamide, un alcool polyvinylique, un éther polyvinylique et un polyol, ou est un segment polycationique choisi dans le groupe constitué par un segment polyallylammonium, polyéthylèneimine, polyvinylbenzyltriméthylammonium, polyaniline, polyaniline sulfonée, polypyrrole et polypyridinium, ou est un segment polyanionique choisi dans le groupe constitué par un acide polyacrylique et polyméthacrylique, un acide polythiophène-acétique, un acide polystyrènesulfonique et un de leurs appropriés.

6. Procédé suivant l'une quelconque des revendications 1 à 5, dans lequel les segments A et B du prépolymère sont liés par une liaison non hydrolysable ou par un élément de pontage choisi dans le groupe constitué par un groupe fonctionnel carbonyle, carbonate, ester, amide, urée ou uréthane et un groupe alkylène, cycloalkylène, aralkylène, arylène ou hétérocyclique contenant un ou deux des groupes fonctionnels mentionnés.

7. Procédé suivant l'une quelconque des revendications 1 à 6, dans lequel le prépolymère contient des segments A et B liés ensemble par une liaison non hydrolysable, et le segment A comprend une séquence polysiloxane ayant des groupes alkylène terminaux de formule : 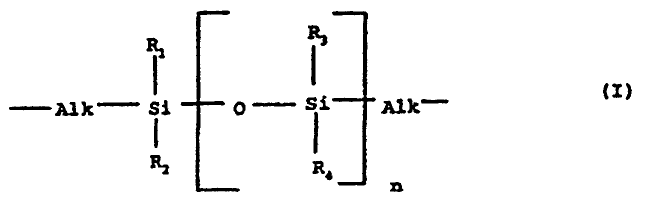 dans laquelle n est un nombre entier de 5 à 700 ; Alk est un groupe alkylène ayant jusqu'à 20 atomes de carbone ; 80-100 % des radicaux R₁, R₂, R₃ et R₄ représentent, indépendamment les uns des autres, un groupe alkyle et 0-20 % des radicaux R₁, R₂, R₃ et R₄ représentent, indépendamment les uns des autres, un groupe alcényle, aryle, fluoroalkyle ou cyanoalkyle.

8. Procédé suivant la revendication 7, dans lequel le segment B du prépolymère est un segment polyacylalkylèneimine qui peut être dérivé d'un iminoéther cyclique de formule (IV) : 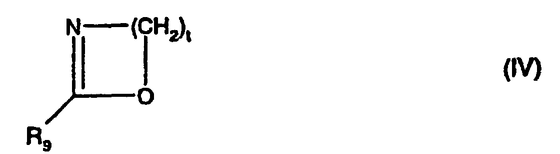 dans laquelle R₉ représente un atome d'hydrogène, un groupe alkyle, hydroxyalkyle ou alcényle ayant jusqu'à 22 atomes de carbone et contenant facultativement un groupe éther, ester ou uréthane, un groupe cycloalkyle, un groupe aralkyle ou un groupe aryle ; et t vaut 2 ou 3.

9. Procédé suivant la revendication 8, dans lequel l'iminoéther cyclique est la 2-méthyl-2-oxazoline, une 2-alcényloxazoline, une 2-(hydroxyalkyl)oxazoline ou un 2-isocyanatoéthylméthacrylate de ceux-ci.

10. Procédé suivant l'une quelconque des revendications 1 à 6, dans lequel le prépolymère répond à la formule :
CP-PAO-DU-ALK-PDMS-ALK-DU-PAO-CP (V)
dans laquelle PDMS est un poly(siloxane disubstitué) divalent ;
CP est un acrylate ou méthacrylate d'isocyanatoalkyle où le groupe uréthane est lié au carbone terminal sur le groupe PAO ;
PAO est un polyoxyalkylène divalent ;
DU est un diuréthane ;
où un oxygène de la liaison uréthane (1) est lié au groupe PAO et un oxygène de la liaison uréthane (2) est lié au groupe ALK ;
et ALK est un groupe alkylène ou alkylèneoxy ayant au moins 3 atomes de carbone.

11. Procédé suivant l'une quelconque des revendications 1 à 6, dans lequel le prépolymère comprend au moins un segment de formule (VI) : 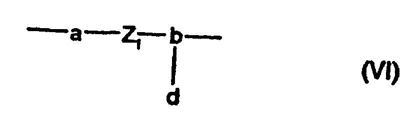 dans laquelle :
(a) est un segment polysiloxane,
(b) est un segment polyol qui contient au moins 4 atomes de C,
Z₁ est un segment X₂-R'-S₂ ou un groupe X₁,
R' est un radical bivalent ou un composé organique ayant jusqu'à 20 atomes de C, et
X₁ et chaque X₂ représentent, indépendamment l'un de l'autre, un radical bivalent qui contient au moins un groupe carbonyle, et
(d) est un radical de formule (VII):
X₃-L-(Y)ₖ₁-P₁ (VII)
dans laquelle :
P₁ est un groupe qui peut être polymérisé par des radicaux libres ;
Y et X₃ représentent, indépendamment l'un de l'autre, un radical bivalent qui contient au moins un groupe carbonyle ;
k1 vaut 0 ou 1 ; et
L est une liaison ou un radical divalent, ayant jusqu'à 20 atomes de C, d'un composé organique.

12. Procédé suivant l'une quelconque des revendications 1 à 11, dans lequel la mésophase est préparée à partir d'un ou plusieurs prépolymères, d'une solution aqueuse et d'autres composants facultatifs.

13. Procédé suivant l'une quelconque des revendications 1 à 12, dans lequel la solution aqueuse comprend de l'eau pure ou un mélange d'eau et d'un ou plusieurs solvants et/ou sels miscibles à l'eau.

14. Procédé suivant la revendication 12 ou 13, dans lequel les autres composants facultatifs sont choisis dans le groupe constitué par un photoinitiateur, un initiateur thermique, un initiateur redox, un agent tensioactif, un comonomère, un comacromère et un agent pharmaceutique efficace.

15. Procédé suivant l'une quelconque des revendications 1 à 14, dans lequel la mésophase est préparée à partir d'un ou plusieurs prépolymères différents ; d'eau qui peut contenir des sels physiologiquement acceptables ; et facultativement d'un photoinitiateur et/ou d'un solvant additionnel choisi dans le groupe constitué par un alcool monohydrique ou polyhydrique, un polyéther, un amide d'acide carboxylique, l'acétone, l'acétonitrile et le diméthylsulfoxyde.

16. Procédé suivant l'une quelconque des revendications 1 à 15, dans lequel la mésophase est préparée à partir d'un ou plusieurs prépolymères différents, d'eau et facultativement, d'un photoinitiateur.

17. Procédé suivant l'une quelconque des revendications 1 à 16, dans lequel la préparation de la mésophase comprend les étapes consistant à :
i) sélectionner des rapports du prépolymère, de la solution aqueuse et des autres composants facultatifs qui donneront une microstructure qui est au moins partiellement bicontinue ; et
ii) provoquer ou permettre la formation de la microstructure bicontinue.

18. Procédé suivant la revendication 17, dans lequel la formation de la microstructure bicontinue est provoquée en mélangeant le prépolymère, la solution aqueuse et les autres composants facultatifs, et en maintenant le mélange à une température de 0 à 100 °C pendant une période de temps allant d'une minute à une semaine sous agitation facultative.

19. Procédé suivant l'une quelconque des revendications 1 à 11, dans lequel la formation de la mésophase comprend la préparation d'un mélange fondu d'un ou plusieurs prépolymères et facultativement d'autres composants.

20. Procédé suivant l'une quelconque des revendications 1 à 19, dans lequel la mésophase obtenue conformément à l'étape b) est de structure cristalline, de préférence de structure lamellaire, hexagonale ou cubique et en particulier de préférence de structure cubique.

21. Procédé suivant l'une quelconque des revendications 1 à 20, dans lequel la réticulation est conduite pendant une période de temps inférieure ou égale à 60 minutes.

22. Procédé suivant l'une quelconque des revendications 1 à 21, dans lequel l'article moulé est une lentille de contact.
